(19) **Europäisches Patentamt**

**European Patent Office**

**Office européen des brevets**

(11) **EP 1 065 826 A2**

(12) **EUROPÄISCHE PATENTANMELDUNG**

(43) Veröffentlichungstag:
**03.01.2001 Patentblatt 2001/01**

(51) Int. Cl.[7]: **H04L 12/24**, H04L 29/14, H04Q 3/00

(21) Anmeldenummer: **00109768.2**

(22) Anmeldetag: **09.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.06.1999 DE 19929943**

(71) Anmelder: **DaimlerChrysler AG
70567 Stuttgart (DE)**

(72) Erfinder:
• **Merget, Peter
73733 Esslingen (DE)**
• **Seidl, Dieter
72766 Reutlingen (DE)**
• **Zeeb, Eberhard
89081 Ulm-Juningen (DE)**

(54) **Verfahren zur Bestimmung der Ausfallwahrscheinlichkeit eines Datennetzes**

(57)    Die Erfindung betrifft ein Verfahren zur Bestimmung der Ausfallwahrscheinlichkeit eines Datennetzes, das wenigstens einen Sender, Übertragungsmittel, Leistung dämpfende und/oder verstärkende Komponenten und wenigstens einen Empfänger aufweist. Erfindungsgemäß ist vorgesehen, daß das Datennetz in einzelne Punkt-zu-Punkt-Verbindungsstrecken aufgeteilt wird, wobei für jede Punkt-zu-Punkt-Verbindungsstrecke die Ausfallwahrscheinlichkeit getrennt bestimmt wird,

die Gesamtausfallwahrscheinlichkeit des Datennetzes als Summe der einzelnen Ausfallwahrscheinlichkeiten der einzelnen Punkt-zu-Punkt-Verbindungsstrecken, abzüglich der Wahrscheinlichkeit, daß zwei oder mehr Punkt-zu-Punkt-Verbindungsstrecken gleichzeitig ausfallen, bestimmt wird.

Fig. 1

EP 1 065 826 A2

Printed by Xerox (UK) Business Services
2.16.7 (HRS)/3.6

**Beschreibung**

Die Erfindung betrifft ein Verfahren zur Bestimmung der Ausfallwahrscheinlichkeit eines Datennetzes gemäß den gattungsbildenden Merkmalen des Anspruchs 1.

In der DE 19538573 A1 ist ein Pegelregelungsverfahren für Lichtwellenleiter-Übertragungsstrecken beschrieben. In einem optischen Datennetz sind wenigstens zwei Lichtwellenleiter-Übertragungsstrecken vorgesehen, die über einen optischen Koppler zu einem Vielkanalsystem zusammengeführt sind und auf welchen sich die Pegel optischer Signale ändern. Die Pegel dieser optischen Signale sind in den unterschiedlichen Netzabschnitten unterschiedlich. Dies ist abhängig von unterschiedlichen Faktoren. Insbesondere die in diesen unterschiedlichen Streckenabschnitten vorliegenden optischen Komponenten bewirken eine Dämpfung des Lichtpegels. Zur Zusammenführung der Lichtwellenleiter-Übertragungsstrecken dienen optische Koppler. Zum Abgleich der unterschiedlichen Pegel zur Zusammenführung der Lichtwellenleiter-Übertragungsstrecken ist in den Lichtwellenleiter-Übertragungsstrecken jeweils wenigstens ein automatisch wirkender, optischer Pegelsteller vorgesehen, der den Pegel automatisch angleicht. Als Pegelsteller wird beispielsweise ein steuerbares, optisches Dämpfungsglied vorgeschlagen.

Bei dieser Art eines Datennetzes ist von Nachteil, daß die Pegel zur Zusammenführung zwar ausgeglichen werden, es aber trotzdem Pegelbudgetverletzungen am Empfänger auftreten können, die zu einem Ausfall des Datennetzes führen können. Als Pegelbudgetverletzung kann die Empfindlichkeit des Empfängers unterschritten werden oder der Empfänger kann übersteuert werden. Dies ist abhängig von einem Unter- oder Überschreiten eines empfängerabhängigen Lichtpegels. Insbesondere wird keinerlei Vorschlag zu einer optimalen Dimensionierung des Datennetzes offenbart.

Die Aufgabe der Erfindung ist die Auslegung und Dimensionierung optischer Datennetze zu unterstützen und somit die Stabilität der optischen Datennetze zu verbessern.

Erfindungsgemäß wird die Aufgabe durch die Merkmale des Anspruchs 1 gelöst. Vorteilhafte Aus- und Weiterbildungen des Erfindungsgegenstandes sind durch die Merkmale der Unteransprüche gekennzeichnet.

Ein wesentlicher Vorteil dieser Ausgestaltungen liegt darin, daß bei der Auslegung und Dimensionierung von Datennetzen bereits eine Ausfallwahrscheinlichkeit des Datennetzes ermittelt werden kann. Dies ermöglicht eine optimierte Auslegung des Datennetzes, insbesondere bei der Einfügung von dämpfenden und/oder verstärkenden Komponenten. Das Datennetz kann bereits bei der Planung optimiert werden, so daß bei Inbetriebnahme die Wahrscheinlichkeit der Ausfälle des Datennetzes minimiert sind.

Die Erfindung wird anhand eines Ausführungsbeispieles in Verbindung mit einer Figurenbeschreibung näher erläutert. Es zeigt

Fig. 1 eine schematische Darstellung eines optischen Datennetzes,
Fig. 2 eine schematische Darstellung von Punkt-zu-Punkt-Verbindungsstrecken in einem optischen Datennetz, sowie
Fig. 3 ein Schaubild über die Lichtpegelgrenzen des Empfängers, sowie
Fig. 4 ein Diagramm zum Verfahrensablauf.

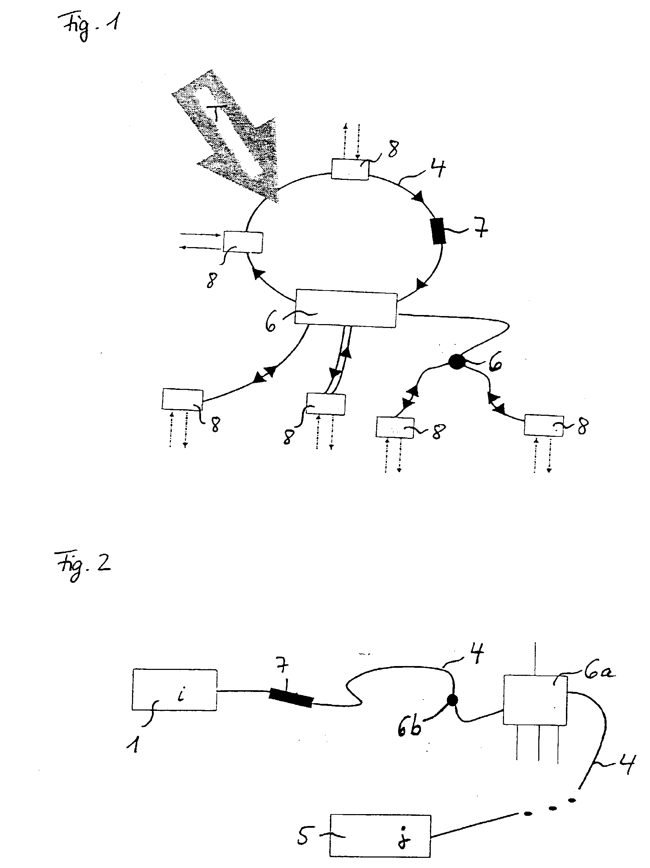

Fig. 1 zeigt eine schematische Darstellung eines optischen Datennetzes, wobei Schnittstellen 8 zum elektrischen Teil des Netzwerkes bestehen. Als Ausführungsbeispiel wurde hier ein optisches Datennetz gewählt. Das Datennetz kann aber auch ein elektrisches Datennetz sein oder es kann eine Datenübertragung per Funk oder Ultraschall erfolgen. Die elektrischen Leitungen sind gestrichelt, die optischen Leitungen sind durchgezogen dargestellt. Das optische Datennetz weist neben den Lichtwellenleitern als Übertragungsmittel 4, beispielsweise auch Koppler 6 und Kuppler 7 als Dämpfungsglieder auf. Größen, die das Übertragungsverhalten eines solchen optischen Systems beeinflussen können, sind neben den elektrischen Eingangsgrößen an den Wandlermodulen vor allem Umwelteinflüsse T wie Temperatur, Feuchtigkeit, Verschmutzungen, mechanische Beanspruchungen, oder Chemikalieneinwirkungen. Außerdem können sich die optischen Eigenschaften einiger Komponenten und Module mit der Zeit verändern, so daß auch das Alter des Systems mit in Betracht gezogen wird. Diese Einflüsse werden bei der weiteren Betrachtung in den Dämpfungs- und Verstärkungseigenschaften der Komponenten berücksichtigt.

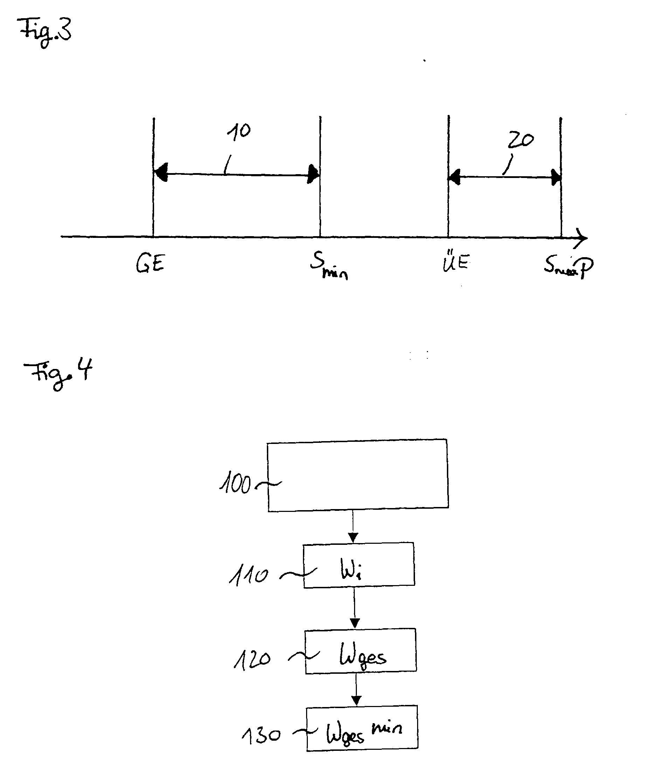

Fig. 2 zeigt nun eine schematische Darstellung von Punkt-zu-Punkt-Verbindungsstrecken in einem optischen Datennetz. Um eine Gesamtausfallwahrscheinlichkeit $W_{ges}$ zu bestimmen, wird das optische Datennetz in einzelne Teilbereiche, sogenannte Punkt-zu-Punkt-Verbindungsstrecken eingeteilt und für jede einzelne Verbindungsstrecke die Ausfallwahrscheinlichkeit $W_i$ bestimmt. Zwischen dem optischen Sender 1 des Netzteilnehmers i und dem optischen Empfänger 5 des Netzteilnehmers j sind neben optischen Lichtleitern 4 verschiedene Dämpfungsglieder angeordnet. Die Dämpfungsglieder sind ein Kuppler 7, ein Sternkoppler 6a, ein Koppler 6b zur Leitungsverzweigung. Ein Datennetz in einem Fahrzeug hat als Netzteilnehmer ein Radio, ein CD-Spieler, eine Spracherkennungseinrichtung und andere. Die am Empfänger 6 ankommende optische Leistung $P_a$ kann bestimmt werden aus der Sendeleistung Pe sowie den einzelnen Dämpfungstermen Di in der Verbindungsstrecke.

$$Pa = Pe - \Sigma Di$$

Ist diese ankommende Leistung kleiner als die Grenzempfindlichkeit des Empfängers Pe, erfolgt keine fehlerfreie Umwandlung in ein elektrisches Signal. Die Übertragung über diese Punkt-zu-Punkt-Verbindungsstrecke ist fehlerhaft. Das gleiche Resultat ergibt sich auch, wenn die am Empfänger 5 auftreffende Lichtleistung größer ist als dessen Übersteuerungsgrenze.

Fig. 3 zeigt ein Schaubild über die Lichtpegelgrenzen des Empfängers 5. Bei einer Pegelbudgetbetrachtung werden die unter allen möglichen Umweltbedingungen spezifizierten Grenzen der Senderausgangsleistung $P_e$ sowie die Grenzempfindlichkeiten GE des Empfängers 5 betrachtet. Aus dem Vergleich dieser Werte wird die zusätzlich zugelassene oder benötigte Dämpfung der optischen Komponenten der Übertragungsstrecke zwischen Sender 1 und Empfänger 5 bestimmt und der Aufbau des optischen Datennetzes festgelegt. Garantieren die Komponentenhersteller die angegebenen Grenzwerte kann gegebenenfalls der Ausfall der Verbindungsstrecke ausgeschlossen werden. Es erfolgt eine fehlerfreie Umwandlung des optischen Signals an Empfänger 5 in ein elektrisches Signal, wenn die ankommende Lichtleistung sich zwischen der Grenzempfindlichkeit GE und der Übersteuerungsgrenze ÜE des Empfängers 5 befindet. Die Sendeleistung des Senders 1 darf Smin nicht unterschreiten, damit genügend Lichtleistung am Empfänger 5 ankommt, wenn die in der Verbindungsstrecke befindlichen optischen Komponenten noch zusätzlich eine Dämpfung 10 der Lichtleistung P verursachen. Die Ausgangsleistung des Senders 1 darf Smax nicht übersteigen, damit die am Empfänger 5 ankommende Lichtleistung die Übersteuerungsgrenze ÜE nicht übersteigt, wobei die Lichtleistung zusätzlich durch die optischen Komponenten gedämpft wird. Optische Komponenten können nicht nur zu einer Dämpfung der Lichtleistung führen, insbesondere Verstärker, führen zu einer Verstärkung der Lichtleistung. Die am Empfänger 5 ankommende Lichtleistung muß sich innerhalb der Empfindlichkeitsgrenze GE und der Übersteuerungsgrenze ÜE befinden. Befindet sich die am Empfänger 5 ankommende Lichtleistung nicht innerhalb dieser Grenze spricht man von einem Ausfall des Datennetzes. Die Dämpfung oder die Verstärkung der Lichtleistung durch die optischen Komponenten muß hierzu betrachtet werden.

Fig. 4 zeigt ein Diagramm zum Verfahrensablauf zur Bestimmung der Gesamtausfallwahrscheinlichkeit $W_{ges}$ eines optischen Datennetzes. In 100 wird das optische Datennetz 1 in Punkt-zu-Punkt-Verbindungsstrecken eingeteilt, die im weiteren getrennt voneinander betrachtet werden. In 110 wird in der Punkt-zu-Punkt-Verbindungsstrecke die Wahrscheinlichkeitsdichte der Lichtdämpfung und/oder -verstärkung der sich darin befindenden optischen Komponenten bestimmt. Hierzu können Angaben der Hersteller verwendet werden. Außerdem wird die Lichtleistung des Senders 1 und die Empfindlichkeit des Empfängers 5 betrachtet. Ist die am Empfänger 5 ankommende Lichtleistung außerhalb der weiterverarbeitbaren Lichtleistung, spricht man von einem Ausfall der Punkt-zu-Punkt-Verbindungsstrecke. Für jede Punkt-zu-Punkt-Verbindungsstrecke wird dann die Ausfallwahrscheinlichkeit $W_i$ bestimmt. In 120 wird die Gesamtausfallwahrscheinlichkeit $W_{ges}$ des Datennetzes bestimmt. Die einzelnen Punkt-zu-Punkt-Verbindungen eines Datennetzes sind im Sinne der Ausfallwahrscheinlichkeiten $W_i$ voneinander unabhängig. Die Gesamtausfallwahrscheinlichkeit $W_{ges}$ des Systems ist deshalb als Summe über die Ausfallwahrscheinlichkeiten $W_i$ aller Punkt-zu-Punkt-Verbindungsstrecken, abzüglich der Wahrscheinlichkeit, daß zwei oder mehr Verbindungsstrecken gleichzeitig ausfallen gegeben. Für die Optimierung eines Datennetzes wird die Gesamtausfallwahrscheinlichkeit $W_{ges}$ minimiert. Dieses Verfahren eignet sich insbesondere bei der Dimensionierung eines optischen Datennetzes im Feldeinsatz, beispielsweise in mobilen Systemen wie Kraftfahrzeuge.

**Patentansprüche**

1. Verfahren zur Bestimmung der Ausfallwahrscheinlichkeit eines Datennetzes, das wenigstens einen Sender (1), Übertragungsmittel (4), die Leistung dämpfende und/oder verstärkende Komponenten und wenigstens einen Empfänger (5) aufweist, dadurch gekennzeichnet,

   daß das Datennetz in einzelne Punkt-zu-Punkt-Verbindungsstrecken aufgeteilt wird, für welche getrennt eine Ausfallwahrscheinlichkeit $W_i$ bestimmt wird, die Gesamtausfallwahrscheinlichkeit $W_{ges}$ des Datennetzes als Summe der einzelnen Ausfallwahrscheinlichkeiten $W_i$ der einzelnen Punkt-zu-Punkt-Verbindungsstrecken, abzüglich der Wahrscheinlichkeit, daß zwei oder mehr Punkt-zu-Punkt-Verbindungsstrecken gleichzeitig ausfallen, bestimmt wird.

2. Verfahren zur Bestimmung der Ausfallwahrscheinlichkeit eines Datennetzes nach Anspruch 1, dadurch gekennzeichnet,

   daß das Datennetz so optimiert wird, daß die Gesamtausfallwahrscheinlichkeit $W_{ges}$ minimiert ist.

3. Verfahren zur Bestimmung der Ausfallwahrscheinlichkeit eines Datennetzes nach den Ansprüchen 1 und 2, dadurch gekennzeichnet,

daß die Wahrscheinlichkeitsdichte der am Empfänger (5) auftreffenden Leistung (P) bestimmt wird, wobei das Übersteigen (ÜE) oder Unterschreiten (GE) einer Empfindlichkeitsgrenze des Empfängers (5) zu einem Ausfall des Datennetzes führt.

4.  Verfahren zur Bestimmung der Ausfallwahrscheinlichkeit eines Datennetzes nach Anspruch 3, dadurch gekennzeichnet,

daß die Wahrscheinlichkeitsdichte der am Empfänger (5) auftreffenden Leistung durch Bestimmung der Wahrscheinlichkeitsdichte der Leistung des Senders (1) und der Wahrscheinlichkeitsdichte der Dämpfung oder Verstärkung jeder in der Punkt-zu-Punkt-Verbindungsstrecke eingefügten Komponente ermittelt wird.

5.  Verfahren zur Bestimmung der Ausfallwahrscheinlichkeit eines Datennetzes nach Anspruch 4, dadurch gekennzeichnet,

daß die Wahrscheinlichkeitsdichte der Dämpfung oder Verstärkung der Komponente von Umwelteinflüssen, wie beispielsweise der Temperatur, Spannungsversorgung, Verschmutzung, Alter abhängig ist.

6.  Verfahren zur Bestimmung der Ausfallwahrscheinlichkeit eines Datennetzes nach den Ansprüchen 1 bis 5, dadurch gekennzeichnet,

daß das Datennetz ein elektrisches und/oder optisches Datennetz und/oder ein Funk- und/oder Ultraschallnetz ist.

Fig. 1

Fig. 2

Fig.3

Fig. 4